(19) Europäisches Patentamt
European Patent Office
Office européen des brevets

(11) EP 0 958 463 B1

(12) **EUROPÄISCHE PATENTSCHRIFT**

(45) Veröffentlichungstag und Bekanntmachung des Hinweises auf die Patenterteilung:
**10.12.2003 Patentblatt 2003/50**

(21) Anmeldenummer: **97953794.1**

(22) Anmeldetag: **12.12.1997**

(51) Int Cl.$^7$: **F16D 57/04**

(86) Internationale Anmeldenummer:
**PCT/EP97/06975**

(87) Internationale Veröffentlichungsnummer:
**WO 98/035170 (13.08.1998 Gazette 1998/32)**

(54) **HYDRODYNAMISCHER RETARDER MIT AXIAL VERSCHIEBBAREM STATOR**

HYDRODYNAMIC RETARDER WITH AN AXIALLY DISPLACEABLE STATOR

RALENTISSEUR HYDRODYNAMIQUE A STATOR DEPLACABLE AXIALEMENT

(84) Benannte Vertragsstaaten:
**DE FR GB IT SE**

(30) Priorität: **06.02.1997 DE 19704304**
**06.02.1997 DE 19704407**

(43) Veröffentlichungstag der Anmeldung:
**24.11.1999 Patentblatt 1999/47**

(73) Patentinhaber: **Voith Turbo GmbH & Co. KG**
**89522 Heidenheim (DE)**

(72) Erfinder:
• **FRIEDRICH, Jürgen**
**D-74564 Crailsheim (DE)**

• **HEILINGER, Peter**
**D-74564 Crailsheim (DE)**
• **HÖLLER, Heinz**
**D-74564 Crailsheim (DE)**

(74) Vertreter: **Dr. Weitzel & Partner**
**Friedenstrasse 10**
**89522 Heidenheim (DE)**

(56) Entgegenhaltungen:
| | |
|---|---|
| DE-A- 1 600 154 | DE-A- 1 600 187 |
| DE-A- 1 675 248 | DE-A- 3 042 017 |
| DE-A- 3 207 634 | DE-A- 4 010 970 |
| DE-A- 4 420 204 | DE-C- 3 113 408 |

EP 0 958 463 B1

## Beschreibung

Die Erfindung betrifft einen hydrodynamischen Retarder gemäß dem Oberbegriff von Anspruch 1 sowie ein Verfahren zum selbsttätigen Verbringen eines Retarders mittels Systemenergie aus einer ersten Position in eine zweite Position.

Hydrodynamische Retarder sind beispielsweise aus VDI Handbuch Getriebetechnik II, VDI-Richtlinien VDI 2153, Hydrodynamische Leistungsübertragung Begriffe - Bauformen - Wirkungsweisen, Kapitel 7, Bremsen oder Dubbel, Taschenbuch für den Maschinenbau, 18. Auflage, Seiten R49 bis R53, deren Offenbarungsgehalt vollumfänglich in die Anmeldung mit einbezogen. Derartige Retarder werden, insbesondere beim Einsatz in Kraftfahrzeugen oder in Anlagen mit stark wechselndem Betrieb, durch Füllen und Entleeren des beschaufelten Arbeitskreislaufs mit einem Betriebsfluid ein- oder ausgeschaltet. Auch bei ausgeschaltetem Retarder ist noch ein Restmoment vorhanden, beispielsweise aufgrund einer umlaufenden Restölmenge. Das durch das Restmoment bedingte Bremsmoment ist zwar sehr gering, kann sich jedoch bei hohen Drehzahlen sehr störend auswirken und zu einer unzulässig hohen Erwärmung des Retarders führen. Zur Vermeidung der Ventilationsverluste sind bereits eine Reihe von Lösungen bekannt. Dazu gehören u.a. die Verwendung von Statorbolzen sowie die Möglichkeit einer Kreislaufevakuierung. Diese Lösungen sind jedoch sehr aufwendig in ihrer Umsetzung und bedingen einen erhöhten Platzbedarf und damit größere Retarderabmessungen. Wesentliche Nachteile bei der Verwendung von Statorbolzen sind darin zu sehen, daß diese aufgrund ihrer Anordnung im Profilgrund des Stators auch im Bremsbetrieb in den Arbeitskreislauf hineinreichen und diesen damit stören. Die Möglichkeit der Verwendung getrennter äußerer Kühl-Kreisläufe, bei der beim Leerlaufbetrieb eine genau bestimmte Ölmenge in einem separaten Kreislauf eingeschlossen wird, ist sehr aufwendig in ihrer Umsetzung, da zusätzliche Bauteile benötigt werden. Des weiteren muß ständig eine sichere Trennung zwischen den einzelnen Zirkulationswegen gewährleistet sein.

Eine weitere Möglichkeit zur Reduzierung der Leerlaufverluste besteht im Verschwenken der Statorschaufelrades gegenüber dem Rotorschaufelrad. Möglichkeiten zur Lageänderung des Statorschaufelrades gegenüber dem Rotorschaufelrad bzw. eine Verschiebung derselben sind bereits aus den folgenden Druckschriften bekannt:

1. DE 31 13 408 C1
2. DE 40 10 970 A1
3. D E 44 20 204 A1
4. DE 16 00 187 A1
5. DE 30 42 017 A1

Die diesen Ausführungen zugrundeliegende Aufgabe besteht in einer aktiven Anpassung an verschiedene Betriebszustände.

Die DE 31 13 408 C1 offenbart Möglichkeiten einer Statorschaufelradverstellung eines Retarders für den Einsatz in stationären Anlagen, beispielsweise in Windkraftanlagen zur Umsetzung der Windenergie in Wärme. Die Verstellung erfolgt manuell oder mittels entsprechender Hilfsmittel. Die Feststellung des Statorschaufelrades in der ausgeschwenkten Lage erfolgt mittels mechanischer Hilfsmittel, beispielsweise in Form von Schrauben. Die Verstellung erfolgt zum Zweck der Anpassung der Strömungsbremse an die Windkraftanlage. Der Zeitaufwand für die Realisierung einer Verstellung ist entsprechend hoch, und die Ausführung ist demzufolge in keiner Weise für den Einsatz im Fahrzeug geeignet.

Der in der Druckschrift DE 40 10 970 A1 offenbarte Retarder weist analog zu der erstgenannten Druckschrift ein Statorschaufelrad auf, das in seiner Lage veränderbar ist. Jedoch erfolgt hier eine Lageveränderung durch eine zusätzlich zum Bremsmoment erzeugte Reaktionskraft, die dem Bremsmoment proportional ist. Diese Reaktionskraft wird durch eine entsprechende Gestaltung und Lagerung des Schaufelrades erzeugt. Der Reaktionskraft wird eine Verstellkraft, die von einer Verstelleinrichtung aufgebracht wird, entgegengesetzt. Die Größe der Verstellkraft beeinflußt dabei entscheidend die Wirkung der Reaktionskraft und damit das Bremsmoment aufgrund der Bedingung, daß die Summe aller auf ein abgeschlossenes System wirkenden äußeren Momente gleich Null ist. Beide Möglichkeiten dienen zur Einstellung bzw. Steuerung des Bremsmomentes. Sie zeichnen sich durch einen enormen konstruktiven Aufwand sowie eine hohe Bauteilanzahl aus.

Aus der DE 44 20 204 A1 ist ein Retarder mit einem selbsttätigen Schwenkstator bekannt geworden, der aufgrund seiner exzentrischen Lagerung im Leerlaufbetrieb selbsttätig in eine Lage gebracht wird, in der keine oder nur ein geringer Teil an Luftmassen zwischen dem Rotorschaufelrad und dem Statorschaufelrad bewegt wird.

Aus der DE 30 42 017 A1 ist bekanntgeworden, zur Verminderung von Leerlaufverlusten einen Ringschieber vorzusehen, der im Leerlauf eine Austrittsöffnung freigibt, so daß die im Arbeitskreislauf im Leerlauf des Retarders zirkulierende Luft und Flüssigkeiten zumindest teilweise aus dem Arbeitsraum zwischen Stator und Rotor herausgeführt werden, was die Leerlaufverluste spürbar verringert. Das Verbringen des Ringschiebers in die Arbeitsposition erfordert jedoch das Aufbringen einer zusätzlichen Steuerdruckkraft.

Die DE 16 00 187.9 zeigt einen Retarder mit verschiebbarem Statorschaufelrad zur Einstellung eines vorbestimmten Bremsmomentes.

Nachteilig an dieser Konstruktion war, daß zum Verbringen des Schaufelrades in eine vorbestimmte Position zusätzliche Verschiebemittel notwendig waren.

DE-A-1 600 154 zeigt eine hydrodynamische Bremse, die ständig mit Betriebsflüssigkeit gefüllt ist und deren Regelung der Bremsleistung durch An- und Abfahren des Stators vom Rotor erfolgt.

Die Aufgabe der Erfindung besteht darin, einen Retarder der eingangs genannten Art derart weiterzuentwikkeln, daß die genannten Nachteile vermieden werden. Aufgrund dessen, daß der Leerlaufbetrieb etwa 95 % der Gesamtlaufzeit eines Retarders beträgt, ist eine minimale Leerlaufleistung anzustreben. Gleichzeitig soll mit geringstmöglichem konstruktiven Aufwand mittels Systemenergie der Retarder in Betriebsbereitschaft versetzt werden.

Die obengenannte Aufgabe wird durch den hydrodynamischen Retarder mit den Merkmalen des Anspruches 1 gelöst.

Gemäß der erfindungsgemäßen Lösung weist der Retarder Mittel zur axialen Verschiebung des Stators gegenüber dem Rotor auf. Dies ermöglicht es, daß der zwischen Stator und Rotor im Leelrauf bestehende Spalt bei Inbetriebnahme des Retarders selbsttätig verändert wird.

Bei einem ausreichend bemessenen Abstand zwischen Rotor und Stator können die Reaktionsmomente der Luftzirkulation eines entleerten Retarders so stark herabgesetzt werden, daß eine unzulässige Erwärmung des Retarders im Nicht-Bremsbetrieb vermieden wird.

Die axial verschiebbare Lagerung des Stators im Statorgehäuse hat den Vorteil einer relativ einfachen Abdichtung des Statorinnenraums gegenüber dem Statorgehäuse, da keine Abdichtung gegenüber sich drehenden, beispielsweise der rotierenden Rotorwelle erfolgen muß.

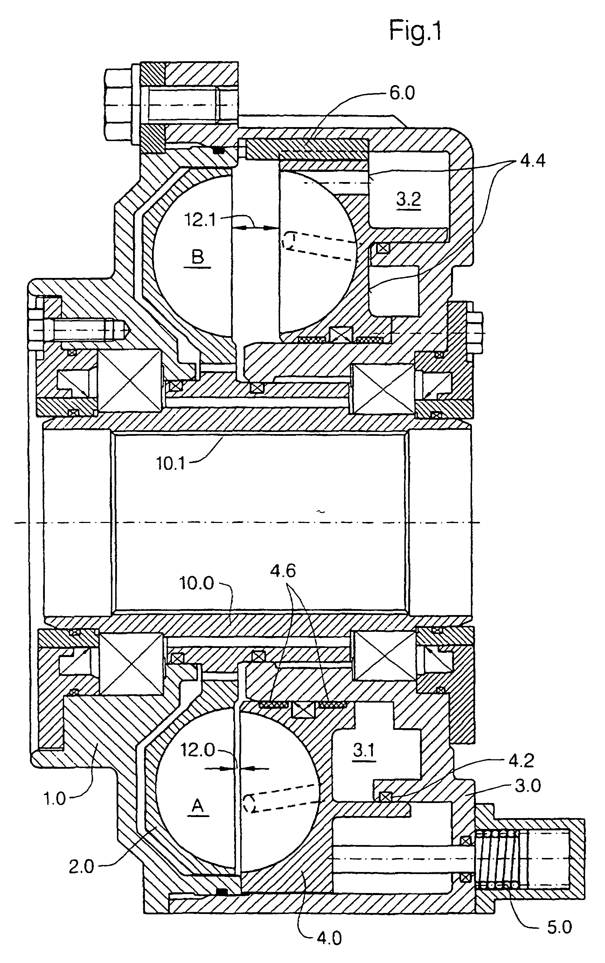

In einer ersten Ausführungsform weist das Statorgehäuse mindestens einen Druckraum - in Fig. 1 mit 3.1 bezeichnet - auf, wobei ein Teil der Begrenzungswand des Druckraumes von der Statorrückseite gebildet wird.

Dies eröffnet die Möglichkeit, eine Verschiebung des Stators dadurch zu erreichen, daß der auf der Statorrückseite angeordnete Druckraum mit einem Druckmedium gefüllt wird, das dazu dient, den Stator nach der Art eines Kolbens durch die Druckkraft axial zu verschieben.

Besonders vorteilhaft ist es, wenn das Statorgehäuse zwei Druckräume aufweist, wobei einer der Druckräume Teil des Auslaßkanales - in Fig. 1 mit 3.2 bezeichnet - des Retarders ist. Eine derartige Ausgestaltung der Erfindung hat den Vorteil, daß kein Druck auf das Statorgehäuse mehr ausgeübt wird, wenn der Retarder entleert ist und damit im ausgeschalteten Zustand ein Spalt entsprechender Größe entsteht und Stator und Rotor weitgehend entkoppelt sind.

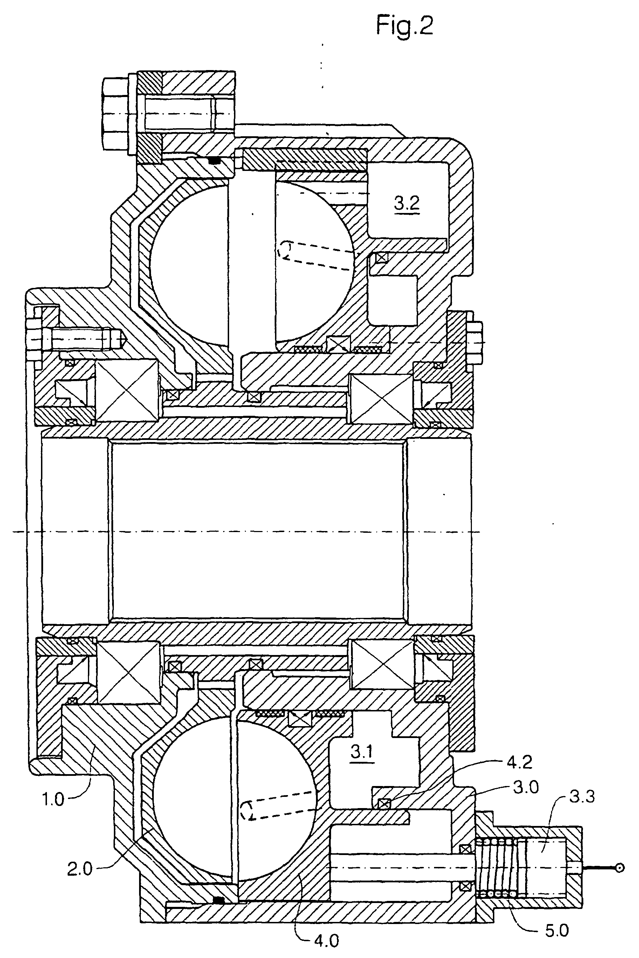

Besonders vorteilhaft ist es, wenn der erste Druckraum Teil des Füllkanales - in Fig. 2 mit 3.1 bezeichnet - für den Retarder ist. Hierdurch kann erreicht werden, daß, wenn der Retarder befüllt wird, der Stator axial gegen den Rotor verschoben wird, so daß sich ein immer engerer Laufradspalt mit steigendem Auslaßdruck einstellt.

Eine vorteilhafte Weiterbildung der Erfindung weist im Statorgehäuse noch einen weiteren, beispielsweise einen dritten Druckraum auf. Dies ist insbesondere dann vorteilhaft, wenn der erste und der zweite Druckraum Teil des Füll- bzw. Auslaßkanales sind. Über den Druckraum 3.3 kann dann nämlich eine zusätzliche Druckkraft aufgebracht werden, beispielsweise wenn der Retarder bereits entleert oder noch nicht vollständig bzw. nur teilweise befüllt ist.

Soll der Stator vom Rotor selbsttätig entkoppelt werden, so ist es vorteilhaft, zwischen Rotor und Stator eine Rückstelleinrichtung vorzusehen. Mit Hilfe dieser Rückstelleinrichtung - mit 5.0 bezeichnet - ist es möglich, den Stator bzw. Rotor im Nicht-Bremsbetrieb selbsttätig in eine Position zu bringen, in der der Stator vom Rotor durch einen großen Spalt getrennt und damit weitgehend entkoppelt ist.

In einer weiteren Ausgestaltung der Erfindung kann vorgesehen sein, daß die Rückstelleinrichtung mindestens eine Feder umfaßt. In einer besonders bevorzugten Ausführungsform kann die Rückstellung auch durch Druckbeaufschlagung erfolgen.

Als Mittel zur axialen Verschiebung des Stators gegenüber dem Rotor ist in einer ersten Ausführungsform ein Kolben vorgesehen bzw. in einer zweiten Ausführungsform ein bspw. elektrischer Stellantrieb.

In einer besonders kostengünstigen Ausführungsform ist vorgesehen, daß die Mittel zum selbsttätigen Verbringen Mittel zum Umsetzen des Statordrehmomentes in eine Axialbewegung umfassen. In der ersten bzw. Leerlaufposition gilt, wenn der Retarder in Drehung aufgrund der Umsetzung des Statordrehmomentes versetzt wird:

$$F \text{ (mechanische Axialkräfte)}$$

$$> -F \text{ (hydraulische Axialkräfte),}$$

so daß der Abstand von Stator und Rotor abnimmt, bis der Abstand im Betriebszustand erreicht wurde.

Für die Umsetzung des auf den Stator ausgeübten Drehmomentes in eine Axialbewegung sind eine Vielzahl konstruktiver Lösungen denkbar.

So kann das Gewinde, entlang dessen der Stator geführt wird, an der äußeren oder inneren Statorfläche angeordnet sein.

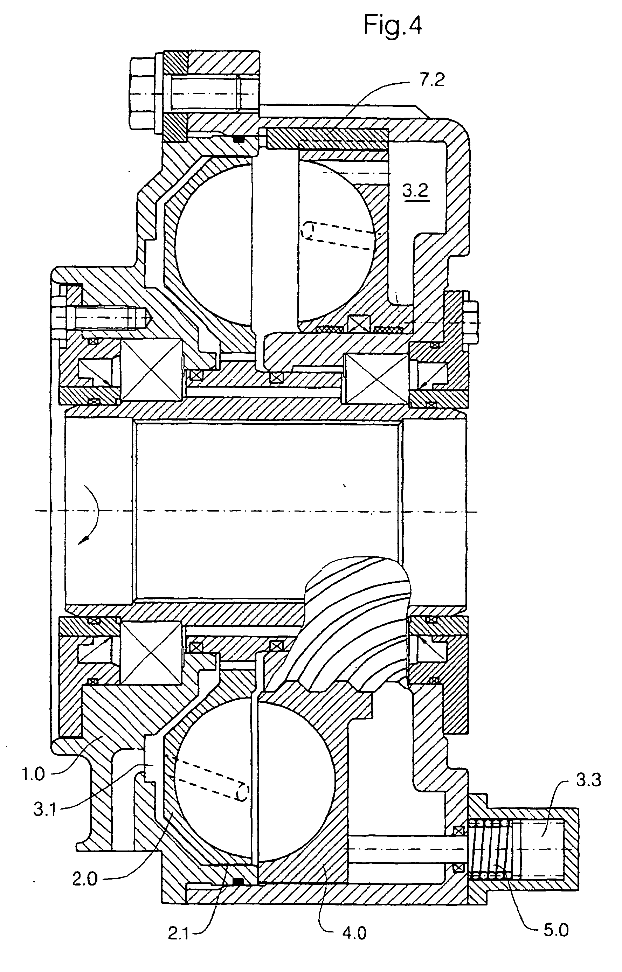

Vorteilhafterweise kann das Gewinde eine gleichmäßige Steigung aufweisen, die in Figur 4 mit 7.0 bezeichnet ist.. Auch eine Kulissenführung wäre denkbar.

Die Erfindung soll nachfolgend anhand der Zeichnungen beispielhaft beschrieben werden.

Es zeigen:

Fig. 1 einen erfindungsgemäßen Retarder gemäß einer ersten Ausführungsform der Erfindung;

Fig. 2 eine Weiterbildung der Erfindung gemäß Fig. 1 mit einem weiteren Druckraum;

Fig. 3 eine Ausführungsform der Erfindung, bei der der Füllkanal rotorseitig angeordnet ist;

Fig. 4 eine Ausführungsform der Erfindung, bei der eine Gewinde mit gleichmäßiger Steigung bzw. eine Kulissenführung zur axialen Verschiebung verwendet wird;

Figur 1 zeigt eine erste Ausführungsform der Erfindung. Dargestellt ist ein hydrodynamischer Retarder, bestehend aus einem Rotorgehäuse 1.0, das einen Rotor 2.0 aufnimmt sowie einem Statorgehäuse 3.0, in dem der Stator 4.0 angeordnet ist. Der Rotor 2.0 ist in vorliegendem Ausführungsbeispiel fest mit einer Welle 10.0 verbunden. Die Welle 10.0 wiederum wird beispielsweise über eine Verzahnung 10.1 beispielsweise mit der Kurbelwelle des Motors im Falle eines Primärretarders verbunden oder aber mit einer getriebeabtriebsseitigen angeordneten Welle, beispielsweise des Getriebeabtriebsflansches im Falle eines Sekundärretarders. Zwischen dem Rotor und dem Stator befindet sich ein Spalt 12.0 bzw. 12.1. Spalt 12.0 ergibt sich im Bremsbetrieb, während Spalt 12.1 im ausgeschalteten Zustand vorliegt.

Die Befüllung des Retarders kann weiterhin für die einzelnen Schaufeln vorteilhafterweise über den Stator in das Zentrum der Kreislaufteile erfolgen, ohne daß ein großer Dichtungsaufwand getrieben werden muß. Eine derartige Befüllung hat den Vorteil, daß mit einem niedrigen Druckniveau das Bremsmoment eingesteuert werden kann und der Gesamtenergieverbrauch sehr gering bleibt.

Die dargestellte Ausführungsform zeichnet sich insbesondere dadurch aus, daß im Statorgehäuse 3.0 zwei Druckräume ausgebildet werden. Druckraum 3.1 ist Teil des Füllkanales des Retarders, und Druckraum 3.2 Teil des Auslaßkanales. Der Druckraum 3.1 bzw. 3.2 umfaßt als Bewandung einen Teil der Gehäusewandung sowie die Statorrückseite 4.4. Der Stator ist auf einem variablen Durchmesser mit einer Kolbenabdichtung 4.2 versehen, so daß die Druckräume bzw. Kanäle 3.1 und 3.2 zueinander abgedichtet sind. Die möglichen Lagen des Stators im Statorgehäuse sind mit den Positionen A und B angegeben. Dabei ist Position A der Betriebszustand "Bremsen" mittels Retarder, bei dem der Abstand 12.0 des Stators 4.0 vom Rotor 2.0 nur sehr gering ist, wohingegen in der Ruheposition B "Leerlaufbetrieb", wie in der Figur 1 dargestellt, der Stator einen großen Abstand 12.1 vom Rotor aufweist. Des weiteren dargestellt ist die axiale Führung des Stators im Statorgehäuse. Die Druckfeder 5.0 wirkt auf den Stator ein und verschiebt diesen, wenn der Retarder nicht befüllt ist, aufgrund der Rückstellkraft selbsttätig in die in Figur 1 gezeigte "Leerlaufposition". Stator 4.0 und Rotor 2.0 weisen in der "Leerlaufposition" den im Rahmen der baulichen Ausgestaltung maximal möglichen Abstand auf. Der Spalt 12.1 ist zwischen Stator 4.0 und Rotor 2.0 in dieser Ruheposition so groß, daß die beiden Schaufelräder praktisch entkoppelt sind, wodurch im Leerlaufbetrieb, d.h. bei entleertem Retarder, nur noch minimale Leenaufwärmeenergie erzeugt wird. Besonders vorteilhaft ist bei der in Figur 1 dargestellten Ausführungsform, daß, wie nachfolgend beschrieben, eine vollständig selbsttätige Verschiebung des Stators in die im unteren Abschnitt von Fig. 1 dargestellte Arbeitsposition und in die oben dargestellte Ruheposition stattfindet. Dies wird dadurch erreicht, daß nach Aktivierung des Retarders beispielsweise mit Hilfe eines Einschaltimpulses das Arbeitsmedium des Retarders durch den Füllkanal und den zugeordneten Druckraum 3.1 in den Retarder strömt. Durch den auf die Statorrückseite 4.4 im Bereich des Füllkanals wirkenden Druck wird der Stator 4.0 in die auf der unteren Hälfte von Figur 1 dargestellte Arbeitsposition mit Spalt 12.0 gegen die Kraft der Feder 5.0 axial verschoben. Das automatische Verbringen und Halten des Stators in der Position für den Bremsbetrieb durch Druckbeaufschlagung der Statorrückseite hat den Vorteil, daß keine zusätzlichen extern aufgebrachten Kräfte hierfür benötigt werden. Das sichere Halten des Retarders in der in Fig. 1 in der unteren Hälfte dargestellten Arbeitsposition wird dadurch erreicht, daß der Druck im Auslaßkanal über den diesem zugeordneten Druckraum 3.2 ebenfalls auf die Rückseite des Stators 4.0 wirkt. Wird das Arbeitsmedium im Nicht-Bremsbetrieb bzw. Leerlaufbetrieb aus dem Retarder entleert, beispielsweise dadurch, daß mittels eines Ausschaltimpulses die Zuführung des Betriebsmediums über den Füllkanal unterbrochen wird, so fallen die Drücke im Bereich des Druckraumes 3.1 und des Druckraumes 3.2 auf einen minimalen Wert ab. Sie reichen nicht mehr aus, um die Feder 5.0 zu komprimieren und den Stator in der Arbeitsposition zu halten. Durch die Druckfeder wird sodann der Stator 4.0 in die auf der unteren Bildhälfte dargestellten Ruheposition gebracht. Im Gegensatz zu Ausführungsformen, bei denen beispielsweise durch Einschieben von Blechwangen die Leerlaufverluste minimiert werden, erfolgt dies vorliegend selbsttätig, d.h. zusätliche Hebelvorrichtungen, die einen großen Fertigungsaufwand und eine seperate Steuermechanik bedingen, werden nicht benötigt.

In der vorliegenden Ausführungsform wird die Drehmomentabstützung durch eine Kulissenführung 6.0 übernommen. Hierin ist jedoch keine Beschränkung zu sehen. Selbstverständlich sind für den Fachmann auch andere Maßnahmen denkbar, wie z. B. Nocken am Außendurchmesser, Führungsbolzen oder eine Verzahnung.

Der besondere Vorteil der dargestellten Lösung gemäß Figur 1 liegt darin, daß keine externen Maßnahmen zur axialen Verschiebung des Stators 4.0 notwendig sind, sondern daß hierfür auf die im System bereits zur Verfügung gestellten Drücke zurückgegriffen werden kann und der Retarder selbsttätig im Nicht-Bremsbetrieb in seine Ruheposition gelangt.

In Figur 2 ist eine weitere Ausführungsform der Erfindung dargestellt. Gleiche Bauteile wie in Figur 1 werden mit denselben Bezugsziffern bezeichnet. Wiederum ist ein hydrodynamischer Retarder, bestehend aus einem Rotorgehäuse 1.0 mit einem Rotor 2.0 sowie einem Statorgehäuse 3.0 mit einem Stator 4.0 dargestellt. Füllkanal 3.1 und Auslaßkanal 3.2 sind wiederum derart angeordnet, daß sie auf die Statorrückseite wirken. Zusätzlich zu der in Figur 1 erläuterten Ausführungsform weist das Gehäuse einen weiteren Druckraum 3.3 auf, der wiederum auf die Statorrückseite wirkt. Die Abdichtung der Druckräume wird durch die Kolbenabdichtungen 4.2 sichergestellt. Wie in Figur 1, ist als Rückstelleinrichtung eine Druckfeder 5.0 dargestellt. Die Funktion des Systems ist der von Figur 1 ähnlich. Der wesentliche Unterschied liegt darin, daß aufgrund des zusätzlichen Druckraumes 3.3 der Stator zusätzlich extern mit Druck beaufschlagt werden kann. Hierbei kann dem Druckraum 3.3 entweder ein Fluid oder Gas zugeführt werden. Dadurch, daß der Druckraum 3.3 unabhängig vom Arbeitsfluid des Retarders befüllt werden kann, ist es möglich, den Stator 4.0 bereits vor Entstehen eines Fülldruckes in Kanal 3.1 gegen die Federkraft 5.0 in Richtung des Rotors 2.0 und damit in die Arbeitsposition axial zu verschieben. Hierdurch kann die Einschaltzeit des Retarders entscheidend verringert werden. Die selbsttätige axiale Verschiebung des Retarders in die in Figur 2 in der oberen Bildhälfte dargestellte Ruheposition erfolgt analog zu Fig. 1 mittels der Rückstellkraft der Druckfeder 5.0.

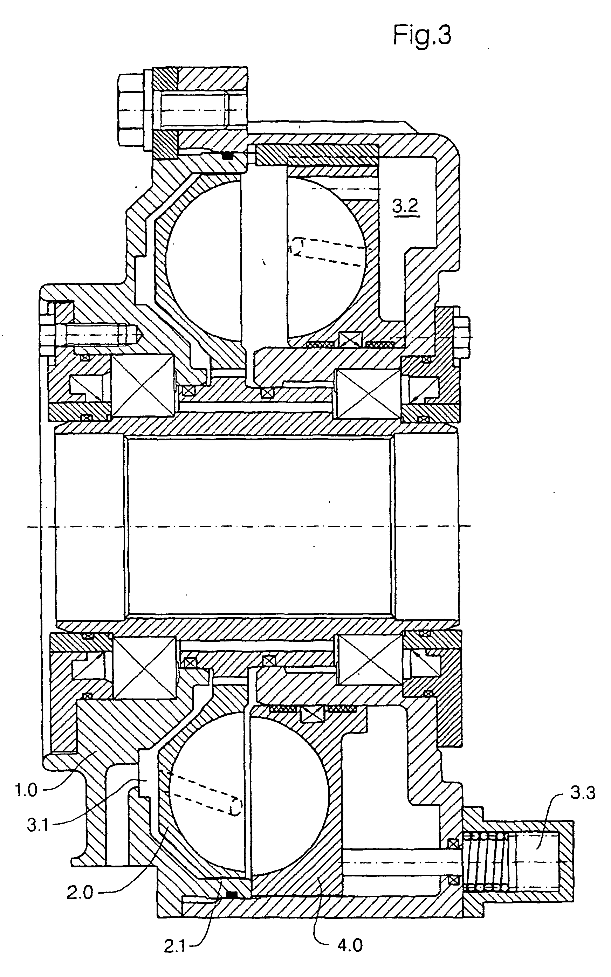

In Fig. 3 ist eine weitere Ausführungsform der Erfindung dargestellt, wobei wiederum gleiche Bauteile mit gleichen Bezugsziffern bezeichnet werden.

Im Gegensatz zu den Figuren 1 und 2 weist der vorliegende Retarder keine Stator-, sondern eine Rotorbefüllung auf. Infolge dessen ist der Füllkanal 3.1 zwischen dem Rotorgehäuse 1.0 und dem Rotor 2.0 angeordnet. Der Rotor weist eine Abdichtung 1.1 zum Füllkanal hin auf. Durch die Verlegung des Füllkanales in dem Bereich zwischen Rotor und Rotorgehäuse, sind zur Abdichtung der Druckräume 3.2 und 3.3 auf der Statorrückseite keine weiteren Abdichtungen erforderlich. Wiederum ist der Druckraum 3.2 Teil des Auslaßkanales, und der Druckraum 3.3 ein weiterer Druckraum, der unabhängig vom Arbeitsmedium des Retarders befüllt werden kann. Aufgrund der vergrößerten Wirkfläche des Druckraumes 3.2 kann der Druck zur axialen Verschiebung des Stators herabgesetzt werden, zum anderen ist es möglich, den Retarder kürzer auszubilden, d.h. Bauraum zu reduzieren. Die Rückstelleinrichtung in Form einer gegen den Stator wirkenden Feder ist analog zu den Figuren 1 und 2 ausgeführt. Betreffend die Funktionsweise des in Figur 3 dargestellten Retarders wird auf die zuvor gemachten Ausführungen zu den Figuren 1 und 2 verwiesen. Die Betätigung erfolgt analog.

Eine weitere Ausgestaltung der Erfindung ist in Figur 4 dargestellt. Wiederum sind gleiche Bauteile mit identischen Bezugszeichen bezeichnet.

Als zusätzliches Mittel zum axialen Verschieben des Stators im Statorgehäuse 3.0 umfaßt die Austührungsform gemäß Figur 4 eine Gewinde 7.0, zweckmäßigerweise ein Steilgewinde oder Schraubengewinde, worüber eine Umsetzung des auf den Stator ausgeübten Drehmomentes in eine Axialbewegung erfolgen kann. Das am Innendurchmesser des Stators dargestellte Gewinde 7.0 in der unteren Bildhälfte kann wahlweise auch am Außendurchmesser in der Variante einer Kulissenführung 7.2 umgesetzt werden. Die Spalte der Führungen und die Drücke der Ringräume sind so gewählt, daß die Leckageströme die Funktionen nicht beeinträchtigen.

Mit der vorliegenden Erfindung wird somit erstmals ein Retarder in kompakter Bauweise zur Verfügung gestellt, der es erlaubt, die Leerlaufverluste auf ein minimales Maß zu reduzieren und darüber hinaus eine stufenlose Einstellung des Bremsmomentes zu realisieren.

**Patentansprüche**

1. Hydrodynamischer Retarder mit

    1.1 einem Rotorgehäuse (1.0), das einen Rotor (2.0) umfaßt;

    1.2 einem Statorgehäuse (3.0), das einen Stator (4.0) mit einem Statorschaufelrad umfaßt, wobei:

    1.3 Rotor- und Statorgehäuse miteinander verbunden sind, derart, daß zwischen Rotor und Stator ein Spalt ausgebildet wird;

1.4 der Retarder Mittel zum axialen Verschieben des Stators gegenüber dem Rotor umfaßt;
**dadurch gekennzeichnet, daß**
1.5 die Mittel zum axialen Verschieben Mittel zum selbsttätigen Verbringen des Statorschaufelrades aus einer ersten Position - Leerlaufposition - in eine zweite Position - Arbeitsposition - und/oder vice versa umfassen, wobei der Spalt zwischen Rotor und Stator in der ersten Position gröber ist als in der zweiten Position.

2. Hydrodynamischer Retarder nach Anspruch 1, **dadurch gekennzeichnet, daß** die Mittel zum selbsttätigen Verbringen einen im Statorgehäuse (3.0) angeordneten Druckraum (3.1) aufweisen, wobei zumindest ein Teil der Begrenzungswand des Druckraumes von der Statorrückseite (4.4) gebildet wird.

3. Hydrodynamischer Retarder nach Anspruch 2, **dadurch gekennzeichnet, daß** das Statorgehäuse (3.0) zwei Druckräume (3.1, 3.2) aufweist, wobei der zweite Druckraum (3.2) Teil des Retarderauslaßkanales ist

4. Hydrodynamischer Retarder nach Anspruch 2, **dadurch gekennzeichnet, daß** das Statorgehäuse (3.0) zwei Druckräume aufweist, wobei der erste Druckraum (3.1) Teil des Retarderfüllkanales und der zweite Druckraum (3.2) Teil des Retarderauslaßkanales ist.

5. Hydrodynamischer Retarder nach einem der Ansprüche 3 oder 4, **dadurch gekennzeichnet, daß** ein weiterer Druckraum (3.3) vorgesehen ist

6. Hydrodynamischer Retarder nach einem der Ansprüche 1 bis 5, **dadurch gekennzeichnet, daß** die Mittel zum selbsttätigen Verbringen Mittel zum Umsetzen des Statordrehmomentes in eine Axialbewegung umfassen.

7. Hydrodynamischer Retarder nach Anspruch 6, **dadurch gekennzeichnet, daß** die Mittel zum Umsetzen des Statordrehmomentes ein Gewinde (7.0) mit gleichmäßiger Gewindesteigung umfassen.

8. Hydrodynamischer Retarder nach Anspruch 6, **dadurch gekennzeichnet, daß** die Mittel zum Umsetzen des Statordrehmomentes ein Gewinde mit ungleichmäßiger Steigung, eine sogenannte Kulissenführung (7.2) umfassen.

9. Hydrodynamischer Retarder nach einem der Ansprüche 7 oder 8, **dadurch gekennzeichnet, daß** das Gewinde (7.0) an der äußeren oder inneren Statorgewindefläche angeordnet ist.

10. Hydrodynamischer Retarder nach einem der Ansprüche 7 oder 8, **dadurch gekennzeichnet, daß** das Gewinde (7.0) als Rollgewinde ausgebildet ist.

11. Hydrodynamischer Retarder nach einem der Ansprüche 1 bis 10, **dadurch gekennzeichnet, daß** die Mittel zum axialen Verschieben mindestens eine zwischen Rotor (2.0) und Stator (4.0) angeordnete Rückstelleinrichtung zur axialen Verschiebung des Stators des unbefüllten Retarders in eine Position, in der der Spalt zwischen Stator und Rotor maximal ist, umfassen.

12. Hydrodynamischer Retarder nach Anspruch 11, **dadurch gekennzeichnet, daß** die Rückstellkraft der Rückstelleinrichtung mechanisch, pneumatisch oder hydraulisch aufgebracht wird.

13. Hydrodynamischer Retarder nach einem der Ansprüche 1 bis 12, **dadurch gekennzeichnet, daß** die Mittel zur axialen Verschiebung einen Kolben umfassen.

14. Verfahren zum selbsttätigen Verbringen eines axial verschieblichen Stators (4.0) mit einem Statorschaufelrad eines hydrodynamischen Retarders aus einer ersten Position - Leerlaufposition- in eine zweite Position - Arbeitsposition -, wobei der hydrodynamische Retarder auf der Statorrückseite (4.4) mindestens eine Druckkammer aufweist, **dadurch gekennzeichnet, daß** in mindestens einem an der Statorrückseite des Retarders angeordneten Druckraum durch Befüllen des Retarders mit Arbeitsmedium ein Druck aufgebaut wird, derart, daß das Statorschaufelrad aus der ersten Position in die zweite Position verbracht wird, so daß sich ein vorbestimmter Spaltabstand zwischen Stator (4.0) und Rotor (2.0) einstellt, wobei der Spaltabstand in der ersten Position größer ist als in der zweiten Position.

15. Verfahren zum selbsttätigen Verbringen eines axial verschiebbaren Stators (4.0) mit einem Staborschaufelrad eines hydrodynamischen Retarders aus einer ersten Position - Leerlaufposition - in eine zweite Position - Arbeitsposition -, wobei der hydrodynamische Retarder Mittel zum Umsetzen des Statordrehmomentes in eine Axialbewegung umfaßt, **dadurch gekennzeichnet, daß** der Retarder befüllt und der Stator versetzt wird, wobei gilt:

mechanische Axialkräfte > hydraulische Axialkräfte,

so daß der Stator aus der Leerlaufposition in die Arbeitsposition verbracht wird, so daß sich ein vorbestimmter Spaltabstand zwischen Stator (4.0) und Rotor (2.0) einstellt.

16. Verfahren nach einem der Ansprüche 14 bis 15, **dadurch gekennzeichnet, daß** der Retarder Rückstelleinrichtungen aufweist und durch Entleeren des Retarders der Retarder selbsttätig in die erste Position verbracht wird.

**Claims**

1. Hydrodynamic retarder with

   1.1 a rotor housing (1.0) comprising a rotor (2.0),
   1.2 a stator housing (3.0) comprising a stator (4.0) with a stator blade wheel, wherein
   1.3 the rotor and stator housings are connected to one another in such a way that a gap is formed between rotor and stator,
   1.4 the retarder comprises means for axial displacement of the stator in respect of the rotor,
   **characterised in that**
   1.5 the means for axial displacement comprise means for automatic movement of the stator blade wheel out of a first position - idle running position - into a second position - operating position - and/or vice versa, the gap between rotor and stator being larger in the first position than in the second position.

2. Hydrodynamic retarder according to claim 1, **characterised in that** the means for automatic movement have a pressure chamber (3.1) arranged in the stator housing (3.0), at least part of the limiting wall of the pressure chamber being formed by the back (4.4) of the stator.

3. Hydrodynamic retarder according to claim 2, **characterised in that** the stator housing (3.0) has two pressure chambers (3.1, 3.2), the second pressure chamber (3.2) being part of the retarder outlet channel.

4. Hydrodynamic retarder according to claim 2, **characterised in that** the stator housing (3.0) has two pressure chambers, the first pressure chamber (3.1) being part of the retarder filling channel and the second pressure chamber (3.2) part of the retarder outlet channel.

5. Hydrodynamic retarder according to one of claims 3 or 4, **characterised in that** a further pressure chamber (3.3) is provided.

6. Hydrodynamic retarder according to any of claims 1 to 5, **characterised in that** the means for automatic movement comprise means for converting the stator torque into an axial movement.

7. Hydrodynamic retarder according to claim 6, **characterised in that** the means for converting the stator torque comprise a thread (7.0) with even thread pitch.

8. Hydrodynamic retarder according to claim 6, **characterised in that** the means for converting the stator torque comprise a thread with uneven pitch, a so-called link guide (7.2).

9. Hydrodynamic retarder according to one of claims 7 or 8, **characterised in that** the thread (7.0) is arranged on the outer or inner stator thread face.

10. Hydrodynamic retarder according to one of claims 7 or 8, **characterised in that** the thread (7.0) is designed as a rolling thread.

11. Hydrodynamic retarder according to any of claims 1 to 10, **characterised in that** the means for axial displacement comprise at least one re-setting device arranged between rotor (2.0) and stator (4.0) for axial displacement of the stator of the unfilled retarder into a position in which the gap between the stator and the rotor is at a maximum.

**12.** Hydrodynamic retarder according to claim 11, **characterised in that** the restoring force of the re-setting device is applied mechanically, pneumatically or hydraulically.

**13.** Hydrodynamic retarder according to any of claims 1 to 12, **characterised in that** the means for axial displacement comprise a piston.

**14.** Method for automatic movement of an axially displaceable stator (4.0) with a stator blade wheel of a hydrodynamic retarder out of a first position - idle running position - into a second position - operating position - wherein the hydrodynamic retarder has at least one pressure chamber on the back (4.4) of the stator, **characterised in that** in at least one pressure chamber arranged on the back of the stator of the retarder a pressure is built up by filling the retarder with operating medium in such a way that the stator blade wheel is moved out of the first position into the second position, so a predetermined gap distance between stator (4.0) and rotor (2.0) occurs, wherein the gap distance is larger in the first position than in the second position.

**15.** Method for automatic movement of an axially displaceable stator (4.0) with a stator blade wheel of a hydrodynamic retarder out of a first position - idle running position - into a second position - operating position, wherein the hydrodynamic retarder has means for converting the stator torque into an axial movement, **characterised in that** the retarder is filled and the stator shifted, wherein it applies that

mechanical axial forces > hydraulic axial forces,

so the stator is moved out of the idle running position into the operating position, so a predetermined gap distance occurs between stator (4.0) and rotor (2.0).

**16.** Method according to one of claims 14 to 15, **characterised in that** the retarder has re-setting devices and the retarder is moved automatically into the first position by emptying the retarder.


**Revendications**

**1.** Ralentisseur hydrodynamique avec

1.1 un carter de rotor (1.0) qui comprend un rotor (2.0) ;
1.2 un carter de stator (3.0), qui comprend un stator (4.0) avec une aube de stator, dans lequel
1.3 carters de rotor et de stator sont mutuellement reliés de façon qu'un interstice soit formé entre rotor et stator ;
1.4 le ralentisseur comprend des moyens de déplacement axial du stator par rapport au rotor ;
**caractérisé en ce que**
1.5 les moyens de déplacement axial comprennent des moyens pour faire passer automatiquement la roue à aubes du stator d'une première position - position de marche à vide - à une deuxième position - position de travail - et/ou vice versa, l'interstice entre rotor et stator étant plus grand dans la première position que dans la deuxième position.

**2.** Ralentisseur hydrodynamique selon la revendication 1, **caractérisé en ce que** les moyens de déplacement automatique présentent un espace de pression (3.1) ménagé dans le carter de stator (3.0), une partie au moins de la paroi de confinement de l'espace de pression étant formée par l'arrière du stator (4.4).

**3.** Ralentisseur hydrodynamique selon la revendication 2, **caractérisé en ce que** le carter de stator (3.0) présente deux espaces de pression (3.1, 3.2), le deuxième espace de pression (3.2) constituant une partie du canal de décharge du ralentisseur.

**4.** Ralentisseur hydrodynamique selon la revendication 2, **caractérisé en ce que** le carter de stator (3.0) présente deux espaces de pression, le premier espace de pression (3.1) constituant une partie du canal de remplissage du ralentisseur et le deuxième espace de pression (3.2) constituant une partie du canal de décharge du ralentisseur.

**5.** Ralentisseur hydrodynamique selon l'une des revendications 3 et 4, **caractérisé en ce qu'**il est prévu un espace de pression supplémentaire (3.3).

**6.** Ralentisseur hydrodynamique selon l'une des revendications 1 à 5, **caractérisé en ce que** les moyens de déplacement automatique comprennent des moyens destinés à transposer le couple de rotation du stator en un mouvement axial.

**7.** Ralentisseur hydrodynamique selon la revendication 6, **caractérisé en ce que** les moyens destinés à la transposition du couple de rotation du stator comprennent un filetage (7.0) à pas constant.

**8.** Ralentisseur hydrodynamique selon la revendication 6, **caractérisé en ce que** les moyens destinés à la transposition du couple de rotation du stator comprennent un filetage à pente variable, dit guide de coulisse (7.2).

**9.** Ralentisseur hydrodynamique selon l'une des revendications 7 et 8, **caractérisé en ce que** le filetage (7.0) est agencé sur la face extérieure ou sur la face intérieure de filetage du stator.

**10.** Ralentisseur hydrodynamique selon l'une des revendications 7 et 8, **caractérisé en ce que** le filetage (7.0) est conçu comme un filetage de roulement.

**11.** Ralentisseur hydrodynamique selon l'une des revendications 1 à 10, **caractérisé en ce que** les moyens de déplacement axial comprennent au moins un dispositif de rappel agencé entre rotor (2.0) et stator (4.0), destiné à déplacer axialement le stator du ralentisseur non rempli dans une position dans laquelle l'interstice entre stator et rotor est maximal.

**12.** Ralentisseur hydrodynamique selon la revendication 11, **caractérisé en ce que** la force de rappel du dispositif de rappel est appliquée de manière mécanique, pneumatique ou hydraulique.

**13.** Ralentisseur hydrodynamique selon l'une des revendications 1 à 12, **caractérisé en ce que** les moyens de déplacement axial comprennent un piston.

**14.** Procédé pour faire passer automatiquement le stator (4.0) à roue à aubes, déplaçable axialement, d'un ralentisseur hydrodynamique, d'une première position - position de marche à vide - à une deuxième position - position de travail -, dans lequel le ralentisseur hydrodynamique comprend au moins une chambre de pression à l'arrière du stator (4.4), **caractérisé en ce que** dans au moins un espace de pression ménagé à l'arrière du ralentisseur, une pression est générée par remplissage du ralentisseur avec du fluide de travail afin de faire passer la roue à aubes du stator de la première position à la deuxième position pour que s'ajuste un interstice de largeur prédéterminée entre stator (4.0) et rotor (2.0), la largeur de l'interstice étant plus grande dans la première position que dans la deuxième position.

**15.** Procédé pour faire passer automatiquement le stator à roue à aubes (4.0), déplaçable axialement, d'un ralentisseur hydrodynamique d'une première position - position de marche à vide - à une deuxième position - position de travail -, le ralentisseur hydrodynamique comprenant des moyens de transposition du couple de rotation du stator en un mouvement axial, **caractérisé en ce que** le ralentisseur est rempli et le stator déplacé, où l'on a :

forces axiales mécaniques > forces axiales hydrauliques,

de sorte que le stator passe de la position de marche à vide à la position de travail afin que s'ajuste une largeur d'interstice prédéterminée entre stator (4.0) et rotor (2.0).

**16.** Procédé selon l'une des revendications 14 et 15, **caractérisé en ce que** le ralentisseur présente des dispositifs de rappel et que le ralentisseur est amené automatiquement dans la première position par évacuation du ralentisseur.

Fig.1

# Fig.2

3.2

3.1

1.0

2.0

4.0

4.2

3.0

3.3

5.0

Fig.3

## Fig.4